# EUROPEAN PATENT APPLICATION

(11) **EP 4 570 671 A1**
(43) Date of publication of application: **18.06.2025**
(21) Application number: 24219617.8
(22) Date of filing: 12.12.2024
(51) Int. Cl.: B64G 1/64, F16C 33/00

(54) **A RELIABLE SEPARATION OF A CLAMPED HDRM INTERFACE**

(30) Priority: 13.12.2023 SE 2351426
(71) Applicant: Beyond Gravity Sweden AB, 405 15 Göteborg (SE)
(72) Inventor: WRAMELL KRISTOFFERSSON, Daniel, 583 36 Linköping (SE); KRISTOFFERSSON, Tobias, 589 51 Linköping (SE)
(74) Representative: Zacco Sweden AB

(57) **Abstract**

A Hold Down Release Mechanism, HDRM, interface (100) for attachment of a first spacecraft (3) to an adjacent structure of a launch vehicle (1) or a second spacecraft (54), wherein the HDRM interface (100) is configured for forming part of a single-point or multi-point releasable attachment of the first spacecraft (3) to said adjacent structure. The HDRM interface (100) comprises a first connector part (101) and a second connector part (102), wherein one of the first and second connector parts (101, 102) is configured to be fastened to said adjacent structure, and the other of the first and second connector parts (101, 102) is configured to be fastened to the first spacecraft (3). The first connector part (101) has a tapered projection (19) and the second connector part (102) has a matching formed tapered recess (20) configured for receiving the tapered projection (19), for enabling load transfer between the first and second connector parts (101, 102) when the tapered projection (19) is located in the tapered recess (20) and the first and second connector parts (101, 102) are pressed together. A dry solid lubricant (301) has been applied on a surface of the tapered projection (19) and/or on a surface of the tapered recess (20).

## Description

### TECHNICAL FIELD

The present disclosure relates to a method for applying a dry solid lubricant on parts of a HDRM interface, as well as a HDRM interface having such a dry solid lubricant.

The HDRM interface according to the disclosure can be arranged for releasably attaching a spacecraft, such as a satellite or spaceship to a launch vehicle, such as a rocket or high altitude airplane.

The HDRM interface comprises first and second connector parts that are arranged to be separated on command, for example via pyrotechnical separation bolt or the like.

### BACKGROUND

A carrier rocket may be used as a launch vehicle for transporting one or more spacecrafts, such as satellites or payloads, into space. The carrier rocket typically consists of several engine stages, which one at a time propel the rocket so as to carry it to an orbital point where the satellite is separated from the carrier rocket. During launching, when one rocket carrier engine stage is expended the next one takes over, whereupon the part of the carrier rocket comprising the expended engine stage detaches from the rest of the carrier rocket.

A spacecraft carrier structure, such as for example a dispenser structure or an adapter structure, is typically mounted above the engine stage, which powers the carrier rocket the final part of its path towards the orbital point where the spacecraft is to be detached. The dispenser/adapter structure have for example the shape of a hollow cylinder or a straight truncated, circular cone, or the like. The dispenser/adapter structure acts as an interface between the carrier rocket and spacecraft and the spacecraft is attached to the dispenser/adapter structure by means of a singular or plurality of individual releasable connections, known as Hold Down Release Mechanism, HDRM, interfaces. A HDRM interface comprises first and second connector parts that are clamped together by a release bolt or the like, for example a pyrotechnical release bolt.

During spacecraft separation, a release bolt of the HRDM interface is activated, whereby the first and second connector parts of the each HDRM interface becomes disconnected substantially simultaneously, and the spacecraft becomes separated from the dispenser/adapter structure.

One example design of a cup and cone multi-point HDRM interface is known from document US 2011/113605 A1.

However, a common problem that needs to be overcome is that the first and second connector parts do not become separated from each other upon release activation, such that spacecraft or load that is secured to dispenser/adapter structure does not become separated at a desired time point.

Consequently, in the field of HDRM interfaces for single-point or multi-point releasably attachment of a spacecraft to the dispenser/adapter structure, there is a continuous demand for further improved HDRM interfaces in terms of a cost-efficient, reliable and repetitive process for providing improved release performance.

### SUMMARY

An object of the present disclosure is to provide a method and HDRM interface where the previously mentioned problems are avoided. This object is at least partly achieved by the features of the independent claims. The dependent claims contain further developments of the method and HDRM interface.

According to a first aspect of the present disclosure, there is provided a method for applying a dry solid lubricant on surface of a tapered projection of the first connector part and/or on surface of a matching formed tapered recess of a second connector part of a Hold Down Release Mechanism (HDRM) interface. The method comprising: providing a first tool having a tapered recess with matching geometry to the tapered projection of the first connector part; applying a dry solid lubricant on the tapered recess of the first tool or on the tapered projection of the first connector part; and pressing the tapered projection of the first connector part against the matching tapered recess of the first tool, or oppositely, while the first connector part or the first tool is rotating.

Alternatively, or in combination with the method step above, the method comprising: providing a second tool having a tapered projection with matching geometry to the tapered recess of the second connector part; applying a dry solid lubricant on the tapered projection of the second tool or on the tapered recess of the second connector part; and pressing the tapered recess of the second connector part against the matching tapered projection of the second tool, or oppositely, while the second connector part or the second tool is rotating.

According to a second aspect of the present disclosure, there is provided a Hold Down Release Mechanism, HDRM, interface for attachment of a first spacecraft to an adjacent structure of a launch vehicle or to an adjacent structure of a second spacecraft, wherein the HDRM interface is configured for forming part of a single-point or multi-point releasable attachment of the first spacecraft to said adjacent structure, wherein the HDRM interface comprises a first connector part and a second connector part, wherein one of the first and second connector parts is configured to be fastened to said adjacent structure, and the other of the first and second connector parts is configured to be fastened to the first spacecraft, wherein the first connector part has a tapered projection, wherein the second connector part has a matching formed tapered recess configured for receiving the tapered projection, for enabling load transfer between the first and second connector parts when the tapered projection is located in the tapered recess and the first and second connector parts are pressed together, and wherein a dry solid lubricant has been applied on a surface of the tapered projection and/or on a surface of the tapered recess.

The method according to the disclosure provides a homogenous lubricating film on the tapered projection and recess surfaces of the first and second connector parts respectively of the HDRM surfaces which have high degree friction performance and which provides a reliable and robust release performance of a separable clamped interface.

Thus, the method according to the disclosure provides a cost-efficient, reliable and repetitive solution for avoiding the problem that the first and second connector parts being stuck to each other due to metal galling or seizure after being pressed together and after the release command is given.

In some example embodiments, that may be combined with any one or more of the above-described embodiments, the HDRM interface is configured for attachment of a first spacecraft to an adjacent structure of a launch vehicle or to an adjacent structure of a second spacecraft, wherein one of the first and second connector parts is configured to be fastened to said adjacent structure, and the other of the first and second connector parts is configured to be fastened to the first spacecraft, wherein the matching formed tapered recess of the second connector part is configured for receiving the tapered projection of the first connector part for enabling load transfer between the first and second connector parts when the tapered projection is located in the tapered recess and the first and second connector parts are pressed together.

In some example embodiments, that may be combined with any one or more of the above-described embodiments, the method provides a homogenous lubricating film on a surface of the tapered projection of the first connector part and/or on an surface of the recess of the second connector part.

In some example embodiments, that may be combined with any one or more of the above-described embodiments, the dry solid lubricant is applied by burnishing the dry solid lubricant onto the surface of the tapered projection and/or tapered recess. Burnishing is a cost-efficient process for applying a dry solid lubrication coating on an object in a reliable and repetitive manner.

In some example embodiments, that may be combined with any one or more of the above-described embodiments, the step of applying a dry solid lubricant on the tapered recess of the first tool or on the tapered projection of the first connector part or on the tapered projection of the second tool or on the tapered recess of the second connector part, involves applying the dry solid lubricant in powder form onto any of said tapered projection or tapered recess. The composition of the dry solid lubrication in powder form provides good distribution of the lubricant over the target surface, thereby ensuring a good quality coating.

In some example embodiments, that may be combined with any one or more of the above-described embodiments, the tapered projection of the first connector part is a circular tapered cone projection, and wherein the tapered recess of the second connector part is a circular tapered cup recess.

In some example embodiments, that may be combined with any one or more of the above-described embodiments, the dry solid lubricant is burnished onto the surface of the tapered projection by means of the first rotating burnishing tool having a soft tooling surface, and/or the dry solid lubricant is burnished onto the surface of the tapered recess by the second rotating burnishing tool having a soft tooling surface. A rotatable burnishing tool enables quick and reliable formation of the dry solid lubrication coating on the desired contact surfaces, thereby ensuring reliable and repetitive production of the coating.

In some example embodiments, that may be combined with any one or more of the above-described embodiments, the dry solid lubricant is Molybdenum disulphide, Tungsten Disulphide, Hexagonal Boron Nitride or PTFE. These materials are generally appropriate for spacecraft applications, i.e. exposed to high vacuum conditions.

In some example embodiments, that may be combined with any one or more of the above-described embodiments, the step of pressing the tapered projection of the first connector part against the matching tapered recess of the first tool, or oppositely; and/or pressing the tapered recess of the second connector part against the matching tapered projection of the second tool, or oppositely; involves pressing with a predetermined pressure is in the range of 5 - 200 Newton, specifically 25 - 75 Newton, and more specifically 40 - 60 Newton. These numbers have given good results in terms of a forming a reliable, repetitive and highly effective dry solid lubrication coating on contact surfaces of a HDRM interface.

In some example embodiments, that may be combined with any one or more of the above-described embodiments, the step of rotating the first connector part or the first tool; and/or rotating the second connector part or the second tool; involves rotating with a predetermined speed in the range of 50-800 revolutions per minute (rpm), specifically in the range of 100 - 400 rpm, and more specifically in the range of 170 - 270 rpm. These numbers have given good results in terms of a forming a reliable, repetitive and highly effective dry solid lubrication coating on contact surfaces of a HDRM interface.

In some example embodiments, that may be combined with any one or more of the above-described embodiments, the step of pressing the tapered projection of the first connector part against the matching tapered recess of the first tool, or oppositely; and/or pressing the tapered recess of the second connector part against the matching tapered projection of the second tool, or oppositely; involves pressing with a predetermined time period in the range of 10-240 seconds, specifically in the range of 30 - 150 seconds, and more specifically in the range of 50 - 70 seconds. These numbers have given good results in terms of a forming a reliable, repetitive and highly effective dry solid lubrication coating on contact surfaces of a HDRM interface.

In some example embodiments, that may be combined with any one or more of the above-described embodiments, the dry solid lubricant has been applied by burnishing the dry solid lubricant onto the surface of the tapered projection and/or tapered recess.

In some example embodiments, that may be combined with any one or more of the above-described embodiments, the dry solid lubricant was applied in powder form onto the surface of the tapered projection and/or tapered recess.

In some example embodiments, that may be combined with any one or more of the above-described embodiments, the tapered projection of the first connector part is a circular tapered cone projection, wherein the tapered recess of the second connector part is a circular tapered cup recess.

In some example embodiments, that may be combined with any one or more of the above-described embodiments, the dry solid lubricant has been burnished onto the surface of: the tapered projection by a first rotating burnishing tool having a matching circular tapered recess with a soft tooling surface, and/or the tapered recess by a second rotating burnishing tool having a matching circular tapered projection with a soft tooling surface.

In some example embodiments, that may be combined with any one or more of the above-described embodiments, the dry solid lubricant has been burnished onto the surface of the tapered projection and/or the tapered recess by initially applying the dry solid lubricant on the tooling surface.

In some example embodiments, that may be combined with any one or more of the above-described embodiments, the dry solid lubricant has been burnished onto the surface of the tapered projection of the first connector part by applying the dry solid lubricant and subsequently pressing the tapered projection of the first connector part against the matching circular tapered recess of the first tool, or oppositely, while the first connector part or the first tool is rotating; and/or the dry solid lubricant has been burnished onto the surface of the tapered recess of the second connector part by applying the dry solid lubricant and subsequently pressing the tapered recess of the second connector part against the matching circular tapered projection of the second tool, or oppositely, while the second connector part or second tool is rotating.

In some example embodiments, that may be combined with any one or more of the above-described embodiments, the dry solid lubricant is Molybdenum disulphide, Tungsten Disulphide, Hexagonal Boron Nitride or PTFE.

In some example embodiments, that may be combined with any one or more of the above-described embodiments, pressing the tapered projection of the first connector part against the matching tapered recess of the first tool, or oppositely; and/or pressing the tapered recess of the second connector part against the matching tapered projection of the second tool, or oppositely; was performed with a predetermined pressure is in the range of 5 - 200 Newton, specifically 25 - 75 Newton, and more specifically 40 - 60 Newton.

In some example embodiments, that may be combined with any one or more of the above-described embodiments, rotating the first connector part or the first tool; and/or rotating the second connector part or the second tool; was performed by rotating with a predetermined speed in the range of 50-800 revolutions per minute (rpm), specifically in the range of 100 - 400 rpm, and more specifically in the range of 170 - 270 rpm.

In some example embodiments, that may be combined with any one or more of the above-described embodiments, pressing the tapered projection of the first connector part against the matching tapered recess of the first tool, or oppositely; and/or pressing the tapered recess of the second connector part against the matching tapered projection of the second tool, or oppositely; was performed with a predetermined time period in the range of 10-240 seconds, specifically in the range of 30 - 150 seconds, and more specifically in the range of 50 - 70 seconds.

In some example embodiments, that may be combined with any one or more of the above-described embodiments, the method is repeated until the required result is achieved.

The skilled person in the art realizes that different features of the present disclosure may be combined to create embodiments other than those explicitly described hereinabove and below, without departing from the scope of the present disclosure

### BRIEF DESCRIPTION OF DRAWINGS

The HDRM interface and associated method according to the disclosure will be described in detail in the following, with reference to the attached drawings, in which
- Fig. 1: shows a launch vehicle carrying a dispenser structure and a plurality of spacecrafts,
- Fig. 2: shows a dispenser structure with a single spacecraft,
- Fig. 3: shows a dispenser structure with multiple spacecrafts,
- Fig. 4: shows a cross-section of a spacecraft attachment via HDRM interfaces,
- Fig. 5A: shows a first spacecraft attached to a second spacecraft carried by the launch vehicle,
- Fig. 5B: shows a cross-section of the launch vehicle of figure 5A,
- Fig. 6A-B: show a first example embodiment of the HDRM interface,
- Fig. 7: shows an example embodiment of the first tool,
- Fig. 8: shows an example embodiment of the second tool,
- Fig. 9: shows method for applying dry solid lubrication coating on a tapered projection using the first tool,
- Fig. 10A: shows method for applying dry solid lubrication coating on a tapered recess using the second tool, and
- Fig. 10B-C: show magnification views of the resulting dry solid lubrication coating.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

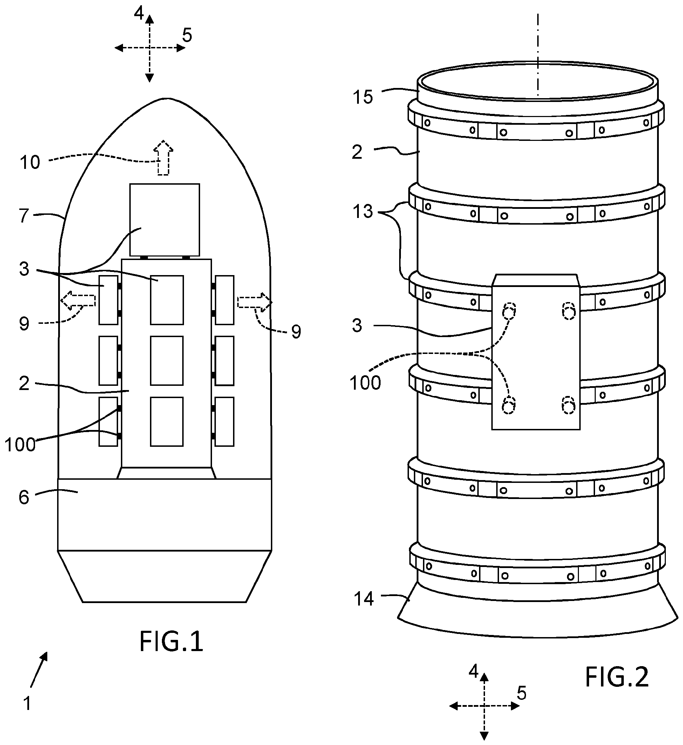

Figure 1 schematically shows a side view of one example embodiment of a launch vehicle 1 comprising a dispenser structure 2, with a set of spacecrafts 3. The launch vehicle 1 has an extension in a longitudinal direction 4 and a radial direction 5, a final engine structure 6, also known as an upper stage, and a fairing 7 covering the dispenser structure 2 and spacecrafts 3. A lower side of the dispenser structure 2 may be bolted to the final engine structure 5 and configured for carrying a plurality of spacecrafts 3 during their transport from earth to space.

In the example illustrated in figure 1, the dispenser structure 2 may have a cylindrical shape with an axial direction parallel with the longitudinal direction 4 of the launch vehicle 1. The dispenser structure 2 may have a plurality of spacecrafts 3 mounted around its cylindrical outer surface, as well as on a top side thereof.

A spacecraft 3 mounted on the cylindrical surface of the dispenser structure 2 may be configured to the be released sideways, as illustrated by first release arrows 9, and a spacecraft 3 mounted on the top side of the dispenser structure 2 may be configured to the be released forwards, i.e. in the longitudinal direction 4, as illustrated by second release arrow 10. However, depending the design of the dispenser structure 2, spacecraft 3 and launch vehicle 1, the release direction of a spacecraft 3 may be different from the longitudinal and radial directions 4, 5 of the launch vehicle 1, and may be virtually any direction relative to a launch vehicle 1.

A plurality of Hold Down Release Mechanism, HDRM, interfaces 100 are used for attachment of a first spacecraft 3 to an adjacent structure of the launch vehicle, such as the dispenser structure 2. The HDRM interface 100, which is also known as separator device, typically include at least a first connector part 101 and a second connector part 102, wherein one of the first and second parts 101, 102 is configured to be fastened to the dispenser structure 2, and the other of the first and second parts 101, 102 is configured to be fastened to the first spacecraft 3.

The release of the first spacecraft 3 is typically performed after the launch vehicle 1 has set the first spacecraft 3 in a proper position and after the fairing 7 has been removed. The HDRM interface 100 may include a release mechanism that enables separation of the first and second connector parts 101, 102 from each other, for example via a pyrotechnical device. The release of the first spacecraft 3 is for example controlled by an electrical signal and all HDRM interfaces 100 holding the same spacecraft are released simultaneously for ensuring a safe release of the first spacecraft from the dispenser structure 2 and launch vehicle 1

The launch vehicle 1 is for example a space rocket having multiple propulsion stages.

The dispenser structure 2 may have virtually any form and shape and serve to mount the first spacecraft to the launch vehicle.

The first spacecraft 3, also known as a payload, may be various types of apparatus or equipment configured for being located and operating in space, such as orbiting satellites, space exploration spacecrafts, etc.

Figure 2 shows a perspective side view of an example embodiment of a cylindrical hollow dispenser structure 2 having a bottom side 14 for attachment to the launch vehicle 1 and a top side 15, plurality of attachment rings 13 for mounting a plurality of spacecrafts thereto. However, in figure 2 only a single spacecraft 3 in mounted state is shown. In the example embodiment of figure 2, four individual HDRM interfaces 100 are used for releasably attaching the first 3 to the dispenser structure, but other number of HDRM interfaces 100 may be alternatively be used, depending on the specific circumstances and requirements and type of spacecraft, etc.

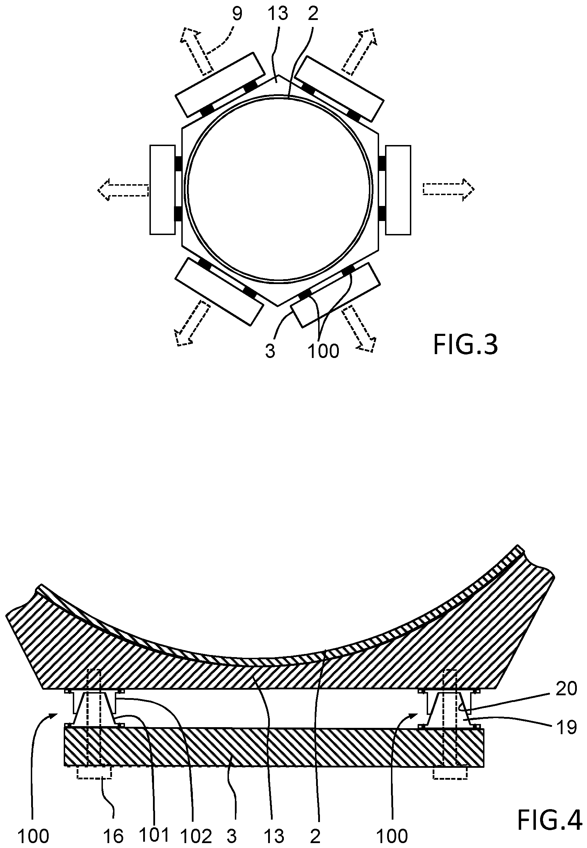

Figure 3 shows a top view of an example embodiment of a cylindrical hollow dispenser structure 2 having a plurality of spacecrafts 3 mounted thereto. Each spacecraft 3 is releasably mounted to the dispenser structure 2 via a multi-point attachment using a plurality of separate HDRM interfaces 100. The first release arrows 9 in figure 3 illustrates the release direction of the individual spacecrafts 3.

Figure 4 schematically shows a cross-sectional view of an example embodiment of a cylindrical hollow dispenser structure 2 having an attachment ring 13 attached thereto for enabling mounting of a first spacecraft 3 thereto. Each HDRM interface 100 comprises first and second connector parts 101, 102 assembled and clamped together by means of a release mechanism 16 including a release bolt. The first connector part 101 has a tapered projection 19 with a circular external surface, and the second connector part 102 has a matching formed tapered recess 20 with a circular interior surface configured for receiving the tapered projection 19, for enabling transfer of at loads between the first and second connector parts 101, 102, when the projection 19 is inserted in the recess 20 and the first and second connector parts 101, 102 are pressed together.

In other words, the HDRM interface 100 is configured for attachment of a first spacecraft 3 to an adjacent structure of a launch vehicle 1 or to an adjacent structure of a second spacecraft 54, wherein one of the first and second connector parts 101, 102 is configured to be fastened to said adjacent structure, and the other of the first and second connector parts 101, 102 is configured to be fastened to the first spacecraft 3, wherein the matching formed tapered recess 20 of the second connector part 102 is configured for receiving the tapered projection 19 of the first connector part 101 for enabling load transfer between the first and second connector parts 101, 102 when the tapered projection 19 is located in the tapered recess 20 and the first and second connector parts 101, 102 are pressed together by for example a release bolt or the like.

Upon release activation of the release mechanism 16, the first and second connector parts 101, 102 become released from the each other and the first spacecraft 3 may become separated from the dispenser structure 2 and associated attachment ring 13.

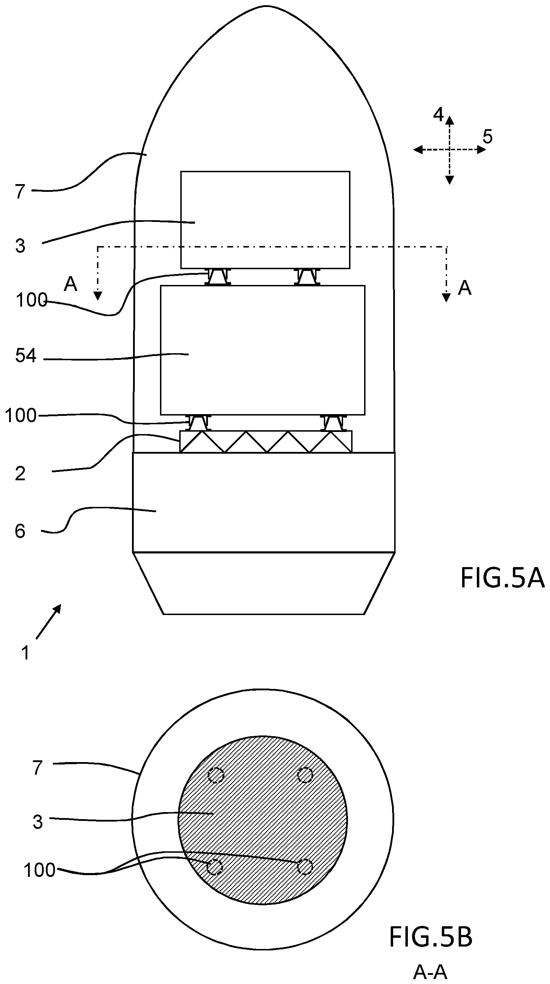

Figure 5A illustrates schematically another implementation of the HDRM interface 100 according to the disclosure, namely as an interface for attachment of a first spacecraft 3 to an adjacent structure of a second spacecraft 54 that is carried by the launch vehicle 1.

In figure 5A, the launch vehicle 1 carries two spacecrafts 3: The second (lower) spacecraft 54 attached to the final engine stage structure 6 of the launch vehicle 1 via a first set of HDRM interfaces 100, and the first (upper) spacecraft 3 attached to the lower spacecraft 54 via a second set of HDRM interfaces 100.

The second spacecraft 54 attached to the final engine stage structure 6 via a dispenser structure 2, which is also sometimes referred to as an adapter structure, and represents all types of rigid intermediate superstructure used as carrier structure for connecting the first and second spacecrafts 3, 54 to the launch vehicle 1.

The HDRM interfaces 100 according to the disclosure may thus be used both for attachment of the second spacecraft 54 to an adjacent structure of an adapter structure, and for attachment of the first spacecraft 3 to an adjacent structure of the second spacecraft 54.

Figure 5B shows a cut along section A-A in figure 5A, and shows schematically a cross-section of the first spacecraft 3, as well as the underlying second set of HDRM interfaces 100, which may include for example include four virtually identical and evenly distributed HDRM interfaces 100.

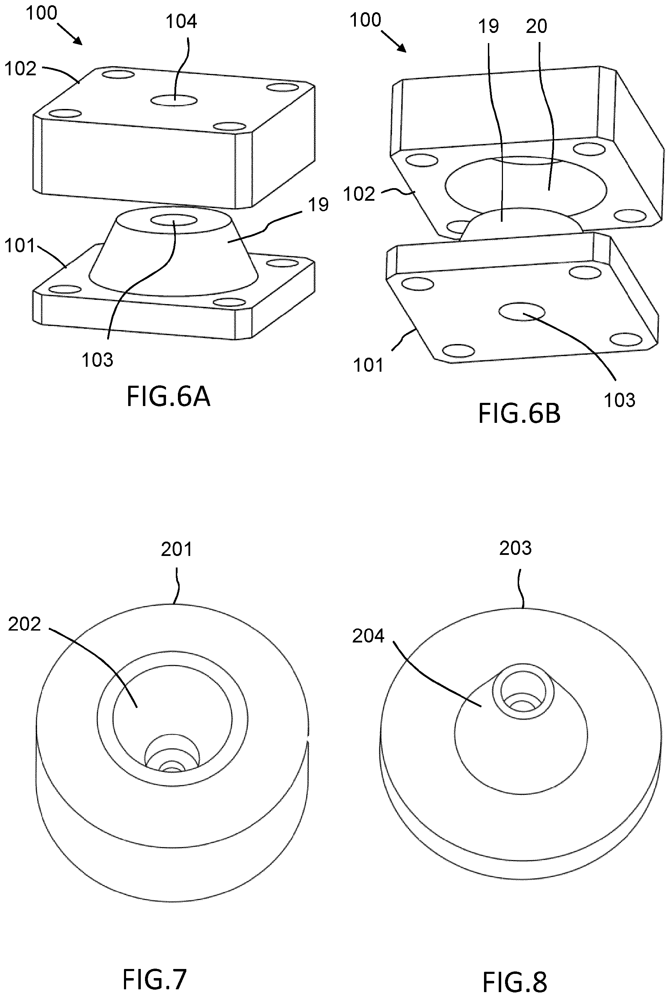

Figure 6A schematically shows a first view of an example embodiment of a HDRM interface 100 comprising a first connector part 101 having a circular tapered cone projection 19 and a second connector part 102 having a circular tapered cup recess 20. Figure 6B shows the same HDRM interface 100 but from another angle, enabling a view of the circular tapered cone projection 19 located within the second part 102.

According to some example embodiments, as for example illustrated in figures 6A and 6B, the tapered projection 19 of the first connector part 101 may have a circular external surface with a conical outer shape, in particular a truncated conical outer shape. Similarly, the matching formed tapered recess 20 of the second connector part 102 may have a conical interior recess 20, in particular a truncated conical interior recess 20.

Moreover, each of first and second connector parts 101, 102 may have a central hole 103, 104 extending through the part 101, 102 for receiving a release mechanism, such as a release bolt.

Figure 7 schematically shows an example embodiment of a first tool 201 having a tooling recess 202 with matching geometry to the tapered projection 19 of the first connector part 101. In other words, the tapered conical recess 202 of the first tool 201 has a shape that matches the tapered conical projection 19 of the first connector part 101.

Figure 8 schematically shows an example embodiment of a second tool 203 having a tooling projection 204 with a matching geometry to the tapered recess 20 of the second connector part 102. In other words, the tapered conical projection 202 of the second tool has a shape that matches the tapered conical recess 20 of the second connector part 102.

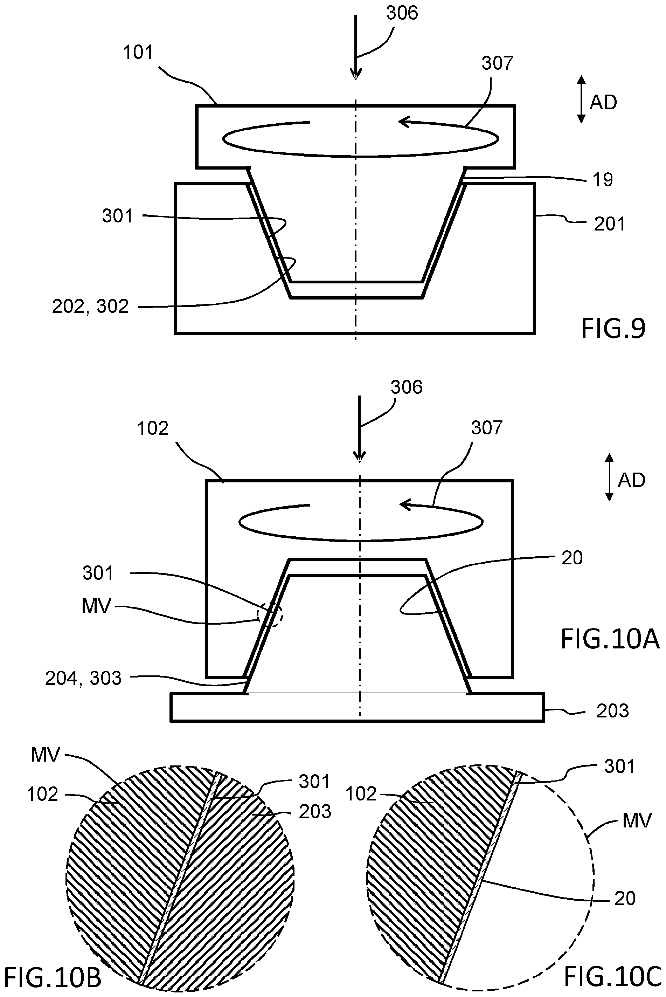

Figure 9 schematically shows a cross-sectional view of the process of applying a dry solid lubricant 301 on an exterior surface of the tapered projection 19 of the first connector part 101. This is performed by applying the dry solid lubricant on the tapered projection 19 of the first connector part 101 and/or on the interior surface of the tapered recess 202 of the first tool 201, and subsequently provide relative rotation motion between the tapered projection 19 of the first connector part 101 and the tapered recess 202 of the first tool 201, as illustrated by the rotational arrow 307, while applying a pressing force on the first connector part 101 for compressing the applied dry solid lubricant as illustrated by force arrow 306 in figure 9.

The pressing force is applied in the axial direction AD of the first connector part 101, i.e. parallel with a symmetry axis of the tapered projection 19 of first connector part. The rotational axis is coaxial with a central axis of the tapered projection 19 and with tapered recess 202 of the first tool 201.

In the example embodiment of figure 9, the relative rotation between the tapered projection 19 of the first connector part 101 and the tapered recess 202 of the first tool 201 is accomplished by rotating the first connector part 101, as schematically illustrated in figure 9.

Figure 10A schematically shows a cross-sectional view of the process of applying a dry solid lubricant 301 on an interior surface of the tapered recess 20 of the second connector part 102. This is performed by applying the dry solid lubricant 301 on the interior surface of the tapered recess 20 of the second connector part 102 and/or on the exterior surface of the tapered projection 204 of the second tool 203, and subsequently provide relative rotation between the tapered recess 20 of the second connector part 102 and the tapered projection 204 of the second tool 203, as illustrated by the rotational arrow 307, while applying a compression pressure on second connector part 102 for compressing the applied dry solid lubricant as illustrated by force arrow 306 in figure 10A.

The pressing force is applied in the axial direction AD of the second connector part 102, i.e. parallel with a symmetry axis of the tapered recess 20 of the second connector part 102. The rotational axis is coaxial with a central axis of the tapered recess 20 and with tapered projection 204 of the second tool 203.

In the example embodiment of figure 10A, the relative rotation between the tapered recess 20 of the first connector part 101 and the tapered projection 204 of the second tool 203 is accomplished by rotating the second connector part 102. The rotational axis is coaxial with a center axis of the circular projection 204 of the first tool 1.

Figure 10B shows a magnified view (MV) of a small area of figure 10A, including the second connector part 102, the second tool 203 and there between a thin coating layer of dry solid lubricant 301.

Figure 10C shows the same magnified view (MV) of said small area of figure 10A but after removal of the second tool 203. Hence, figure 10C shows the second connector part 102 having a thin coating layer of dry solid lubricant 301 applied to the interior surface of the tapered recess 20 of the second connector part 102.

The thickness of the thin coating layer is for example in the range of 1 - 50 micrometer, specifically in the range of 1 - 10 micrometer.

The process for applying a lubricating coating on for example the tapered projection 19 of the first connector part 101 includes in principle a first step of applying dry solid lubricant in powder form on the first tool 201 or tapered projection 19 of the first connector part 101, for example manually using a brush or a flat stick or the like, or by means of a dry solid lubricant applicator machine.

Thereafter, the first tool 201 and first connector part 101 are pushed together, such that the tapered projection 19 of the first connector part 101 enters into the matching formed tapered recess 202 of the first tool 201, while one or both of the first connector part 101 and first tool 201 are rotating for providing a relative rotational motion between the first connector part 101 and first tool 201. The first connector part 101 and first tool 201 are pressed against each other for a certain time period while the relative rotation of maintained, such that the dry solid lubricant in powder form is rubbed in to the surface of the tapered projection 19.

This rubbing process is also known as a burnishing process, i.e. a process of creating solid lubricant film by rubbing of a solid lubricant powder into a surface of an object. Specifically, burnishing is generally known as a rubbing process used to apply a thin film of dry powdered solid lubricant, such as graphite, Molybdenum disulphide, etc., to a metal surface.

The solid lubricant film made from depositing a dry solid lubricant powder on a metal surface cab be performed by cloth burnishing or cloth polishing.

Burnishing by cloth generally results in formation of thin layer of dry solid lubricant on steel substrate so that some of rough tracks are seen on the burnished surface,

During cloth burnishing, the dry solid lubricant powder generally fills microscopic unevenness or grooves in the metal surface for providing a more smooth exterior surface.

The mechanical processing of the dry solid lubricant involves burnishing or polishing the dry solid lubricant into the surface of the product, for producing a film or coating of a dry solid lubricant. The mechanical processing has positive effect on surface quality of produced lubricant film, as well as the binding capacity of solid lubricant to object surface.

The tool used for applying and mechanical processing of the dry solid lubricant is for example a steel tool equipped with a cloth or similar type of relatively soft tooling surface.

It is preferred when both the first and second connector parts 101, 102 are provided with a thin layer of dry solid lubricant, because dry solid lubricants have a layered structure on the molecular level with weak bonding between layers, and such layers can easily slide relative to each other with minimal resistance, thus giving them their low friction properties.

Possibly, a preparation step for cleaning, degreasing and drying the tapered surfaces of the first and second connector parts 101, 102 may be performed before starting applying the dry solid lubricant.

The aim of this disclosure is to provide a new, reliable and repetitive method for burnishing of steel surfaces for providing a high quality solid lubricant film having improved tribological properties, thereby reducing the risk seizure or galling of the first and second connector parts 101, 102. Seizure or galling of the first and second connector parts 101, 102 generally would reduce the reliable and/or quality of the release process of a spacecraft from the carrier, and is thus undesirable. The coating made by a dry solid lubricant on at least one connect surface of the first and second connector parts 101, 102 enables significant reduced risk for seizure or galling.

Dry solid lubricants, such as in particular Molybdenum disulphide, are particularly suitable for space because of its ability to lubricate effectively in vacuum and inert environments. Liquid-based lubricants are generally less suitable for space application due to high vacuum conditions in space.

Moreover, a powder-based dry solid lubricant is more easily applied to a metal substrate compared with for example a dry film lubricant, which is a lubricant dissolved in a fluid and that is applied to a substrate by spraying or painting the substrate, and subsequently dried for eliminating the fluid and thus providing a remaining dry film lubricant.

Consequently, the present disclosure provides a method for applying a dry solid lubricant 301 on an exterior surface of a tapered projection 19 of the first connector part 101 of a HDRM interface. The method comprise a first step of providing a first tool 201 having a tapered recess 202 with matching geometry to the tapered projection 19 of the first connector part 101. The method further comprises a second step of applying a dry solid lubricant 301 on the tapered recess 202 of the first tool 201 or on the tapered projection 19 of the first connector part 101, and subsequently a third step of pressing the tapered projection 19 of the first connector part 101 against the matching tapered recess 202 of the first tool 201, or oppositely, while the first connector part 101 or the first tool 201 is rotating.

This method provides a homogenous lubricating film from the applied dry solid lubricant 301 on the exterior surface of the tapered projection 19 of the first connector part 101.

The tapered projection 19 of the first connector part 101 is a circular tapered cone projection.

The present disclosure also provides a method for applying a dry solid lubricant 301 on interior surface of a matching formed tapered recess 20 of a second connector part 102 of a HDRM interface. The method comprise a first step of providing a second tool 203 having a tapered projection 204 with matching geometry to the tapered recess 20 of the second connector part 102. The method further comprises a second step of applying a dry solid lubricant 301 on the tapered projection 204 of the second tool 203 or on the tapered recess 20 of the second connector part 102, and subsequently a third step of pressing the tapered recess 20 of the second connector part 102 against the matching tapered projection 204 of the second tool 203, or oppositely, while the second connector part 102 or the second tool 203 is rotating.

This method provides a homogenous lubricating film from the applied dry solid lubricant 301 on the interior surface of the recess 20 of the second connector part 102.

The tapered recess 20 of the second connector part 102 is a circular tapered cup recess.

As mentioned above, the dry solid lubricant 301 is preferably applied by burnishing, polishing or rubbing the dry solid lubricant 301 into the surface of the tapered projection 19 and/or tapered recess 20. This may be performed by using a tool equipped with a cloth or similar type of soft materials.

In other words, the dry solid lubricant 301 is burnished onto the surface of the tapered projection 19 by means of the first rotating burnishing or polishing tool 201 having a soft, resilient or elastic tooling surface. Similarly, the dry solid lubricant 301 is burnished onto the surface of the tapered recess 20 by the second rotating burnishing tool 203 having a soft tooling surface.

The step of pressing the tapered projection 19 of the first connector part 101 against the matching tapered recess 202 of the first tool 201, or oppositely, and/or the step of pressing the tapered recess 20 of the second connector part 102 against the matching tapered projection 204 of the second tool 203, or oppositely, generally involves pressing with a predetermined pressure level, i.e. pressing together the connector part 101 and the first tool 201 with a predetermined pressure level, or pressing together the second connector part 102 and the second tool 203 with a predetermined pressure level.

Experimental testing has shown that a pressure level of about 40 - 60 Newton has provided good results in terms of structure and tribological properties of a resulting solid lubrication coating.

However, in some example embodiments, a lower pressure level may be sufficient, and in other example embodiments a higher pressure may be required, depending in the circumstances. For example, a large diameter HDRM interface may require a larger pressing force to provide the desired film or coating of a dry solid lubricant by burnishing or polishing the dry solid lubricant onto the surface of the connector part, and oppositely. Similarly, a large conical angle of the tapered projection and recess of the first and second connector parts generally requires less pressing force because the angle of the surface normal of the surface to be coated with dry solid lubricant is then more aligned with the axial direction of the connector part, and oppositely. Hence, in some example embodiments, the predetermined pressure level is in the range of 5 - 200 Newton, specifically 25 - 75 Newton.

As described above, the third step of pressing together the connector part 101 and the first tool 201 with a predetermined pressure level, or pressing together the second connector part 102 and the second tool 203 with a predetermined pressure level is performed while at least one of the parts is rotating for providing a relative rotational speed between the parts being pressed together.

Experimental testing has shown that a relative rotational speed in the range of 170 - 270 rpm has provided good results in terms of structure and tribological properties of a resulting solid lubrication coating.

However, in some example embodiments, a lower relative rotational speed may be sufficient, and in other example embodiments a higher relative rotational speed may be required, depending in the circumstances. Moreover, a higher pressure level, as described above, generally enables reduced relative rotational speed, and oppositely. Hence, in some example embodiments, rotation of the first connector part 101 or the first tool 201, and/or rotation of the second connector part 102 or the second tool 203, involves providing a relative rotation speed in the range of 50-800 revolutions per minute rpm, specifically in the range of 100 - 400 rpm.

The third step of pressing together the connector part 101 and the first tool 201 with a predetermined pressure level, or pressing together the second connector part 102 and the second tool 203 with a predetermined pressure level, while at least one of the parts is rotating for providing a relative rotational speed between the parts being pressed together, should preferably be performed over a certain time period for ensuring proper formation of the dry solid lubrication coating. During this time period, the pressure level and relative rotational speed is preferably maintained constant, although certain variations in pressure and speed may occur.

Experimental testing has shown that a time period in the range of 50 - 70 seconds has provided good results in terms of structure and tribological properties of a resulting solid lubrication coating.

However, in some example embodiments, a shorter time period may be sufficient, and in other example embodiments a longer time period may be required, depending in the circumstances. Moreover, a higher pressure level, as described above, generally enables reduced time period, and oppositely. Hence, in some example embodiments, the pressing step that involves relative rotation of the first connector part 101 and the first tool 201, and/or relative rotation of the second connector part 102 and the second tool 203, is performed over a time period in the range of 10-240 seconds, specifically in the range of 30 - 150 seconds.

In one specific example embodiment, dry solid lubricant in powder form was applied to the first tool 201, and the first connector part 101 and the first tool 201 were subsequently pressed together for a time period of 60 seconds while the pressure level was 50 Newton and the relative rotation between these parts were 220 rpm.

In another specific example embodiment, dry solid lubricant in powder form was applied to the second tool 203, and the second connector part 102 and the second tool 203 were subsequently pressed together for a time period of 60 seconds while the pressure level was 50 Newton and the relative rotation between these parts were 220 rpm. Both this examples provided good quality solid lubrication coatings.

The dry solid lubricant 301 is preferably applied in powder form onto any of said tapered projection 19, 204 or tapered recess 20, 202.

The dry solid lubricant 301 is for example Molybdenum disulphide, Tungsten Disulphide, Hexagonal Boron Nitride or PTFE.

The method for applying a dry solid lubricant 301 on an exterior surface of a tapered projection 19 of the first connector part 101 of a HDRM interface, and/or on interior surface of a matching formed tapered recess 20 of a second connector part 102 of a HDRM interface 100, as described above, results in a HDRM interface having a dry solid lubricant 301 applied on said exterior surface of the tapered projection 19 and/or on said interior surface of the tapered recess 20.

Consequently, the disclosure also relates to HDRM interface 100 for attachment of a first spacecraft 3 to an adjacent structure of a launch vehicle 1 or to an adjacent structure of a second spacecraft 54, wherein the HDRM interface 100 is configured for forming part of a single-point or multi-point releasable attachment of the first spacecraft 3 to said adjacent structure, wherein the HDRM interface 100 comprises a first connector part 101 and a second connector part 102, wherein one of the first and second connector parts 101, 102 is configured to be fastened to said adjacent structure, and the other of the first and second connector parts 101, 102 is configured to be fastened to the first spacecraft 3, wherein the first connector part 101 has a tapered projection 19, wherein the second connector part 102 has a matching formed tapered recess 20 configured for receiving the tapered projection 19, for enabling load transfer between the first and second connector parts 101, 102 when the tapered projection 19 is located in the tapered recess 20 and the first and second connector parts 101, 102 are pressed together, and wherein a dry solid lubricant 301 has been applied on an exterior surface of the tapered projection 19 and/or on an interior surface of the tapered recess 20.

The dry solid lubricant 301 has been burnished onto the surface of the tapered projection 19 by a first rotating burnishing tool 201 having a matching circular tapered recess 202 with a soft tooling surface.

More in detail, the dry solid lubricant 301 has been burnished onto the surface of the tapered projection 19 of the first connector part 101 by applying the dry solid lubricant 301 on the first tool 201 or on the tapered projection 19 and subsequently pressing the tapered projection 19 of the first connector part 101 against the matching circular tapered recess 202 of the first tool 201, or oppositely, while the first connector part 101 or the first tool 201 is rotating.

Alternatively, or in combination with above, the dry solid lubricant 301 has been burnished onto the surface of the tapered recess 20 by a second rotating burnishing tool 203 having a matching circular tapered projection 204 with a soft tooling surface.

More in detail, the dry solid lubricant 301 has been burnished onto the surface of the tapered recess 20 of the second connector part 102 by applying the dry solid lubricant 301 on the second tool 203 or in the tapered recess of second connector part 102 and subsequently pressing the tapered recess 20 of the second connector part 102 against the matching circular tapered projection 204 of the second tool 203, or oppositely, while the second connector part 102 or the second tool 203 is rotating.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof.

Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

**REFERENCE SIGNS**

| | | | |
|---|---|---|---|
| 1. | Launch vehicle | 4. | Longitudinal direction |
| 2. | Dispenser structure | 5. | Radial direction |
| 3. | First spacecraft | 6. | Final engine structure |
| 7. | Fairing | | |
| 9. | First release arrow | | |
| 10. | Second release arrow | | |
| 13. | Attachment ring | | |
| 14. | Bottom side | | |
| 15. | Top side | | |
| 16. | Release mechanism | | |
| 17. | Rotational force | | |
| 19. | Tapered projection | | |
| 20. | Tapered recess | | |
| 54. | Second spacecraft | | |
| 100. | HDRM interface | | |
| 101. | First connector part | | |
| 102. | Second connector part | | |
| 103. | Central hole of first connector part | | |
| 104. | Central hole of second connector part | | |
| 201. | First tool | | |
| 202. | Recess of first tool | | |
| 203. | second tool | | |
| 204. | projection of second tool | | |
| 301. | Dry solid lubricant | | |
| 302. | Tooling surface of first tool | | |
| 303. | Tooling surface of second tool | | |
| 306. | Pressure | | |
| 307. | Rotational motion | | |

## Claims

1. A Hold Down Release Mechanism, HDRM, interface (100) for attachment of a first spacecraft (3) to an adjacent structure of a launch vehicle (1) or to an adjacent structure of a second spacecraft (54), wherein the HDRM interface (100) is configured for forming part of a single-point or multi-point releasable attachment of the first spacecraft (3) to said adjacent structure, wherein the HDRM interface (100) comprises a first connector part (101) and a second connector part (102), wherein one of the first and second connector parts (101, 102) is configured to be fastened to said adjacent structure, and the other of the first and second connector parts (101, 102) is configured to be fastened to the first spacecraft (3), wherein the first connector part (101) has a tapered projection (19), wherein the second connector part (102) has a matching formed tapered recess (20) configured for receiving the tapered projection (19), for enabling load transfer between the first and second connector parts (101, 102) when the tapered projection (19) is located in the tapered recess (20) and the first and second connector parts (101, 102) are pressed together, and wherein a dry solid lubricant (301) has been applied on a surface of the tapered projection (19) and/or on a surface of the tapered recess (20).

2. The HDRM interface according to claim 1, wherein the dry solid lubricant (301) is Molybdenum disulphide, Tungsten Disulphide, Hexagonal Boron Nitride or PTFE.

3. The HDRM interface according to claim 1 or claim 2, wherein the dry solid lubricant (301) has been burnished onto the surface of:
the tapered projection (19) by a first rotating burnishing tool (201) having a matching circular tapered recess (202) with a soft tooling surface, and/or
the tapered recess (20) by a second rotating burnishing tool (203) having a matching circular tapered projection (204) with a soft tooling surface.

4. The HDRM interface according to claim 3,
wherein the dry solid lubricant (301) has been burnished onto the surface of the tapered projection (19) of the first connector part (101) by applying the dry solid lubricant (301) and subsequently pressing the tapered projection (19) of the first connector part (101) against the matching circular tapered recess (202) of the first tool (201), or oppositely, while the first connector part (101) or the first tool (201) is rotating; and/or
wherein the dry solid lubricant (301) has been burnished onto the surface of the tapered recess (20) of the second connector part (102) by applying the dry solid lubricant (301) and subsequently pressing the tapered recess (20) of the second connector part (102) against the matching circular tapered projection (204) of the second tool (203), or oppositely, while the second connector part (102) or the second tool (203) is rotating.

5. A method for applying a dry solid lubricant (301) on surface of a tapered projection (19) of the first connector part (101) and/or on surface of a matching formed tapered recess (20) of a second connector part (102) of a Hold Down Release Mechanism (HDRM) interface, the method comprising:
providing a first tool (201) having a tapered recess (202) with matching geometry to the tapered projection (19) of the first connector part (101);
applying a dry solid lubricant (301) on the tapered recess (202) of the first tool (201) or on the tapered projection (19) of the first connector part (101);
pressing the tapered projection (19) of the first connector part (101) against the matching tapered recess (202) of the first tool (201), or oppositely, while the first connector part (101) or the first tool (201) is rotating; and/or
providing a second tool (203) having a tapered projection (204) with matching geometry to the tapered recess (20) of the second connector part (102);
applying a dry solid lubricant (301) on the tapered projection (204) of the second tool (203) or on the tapered recess (20) of the second connector part (102);
pressing the tapered recess (20) of the second connector part (102) against the matching tapered projection (204) of the second tool (203), or oppositely, while the second connector part (102) or the second tool (203) is rotati ng.

6. The method according to claim 5, wherein the HDRM interface is configured for attachment of a first spacecraft (3) to an adjacent structure of a launch vehicle (1) or to an adjacent structure of a second spacecraft (54), wherein one of the first and second connector parts (101, 102) is configured to be fastened to said adjacent structure, and the other of the first and second connector parts (101, 102) is configured to be fastened to the first spacecraft (3), wherein the matching formed tapered recess (20) of the second connector part (102) is configured for receiving the tapered projection (19) of the first connector part (101) for enabling load transfer between the first and second connector parts (101, 102) when the tapered projection (19) is located in the tapered recess (20) and the first and second connector parts (101, 102) are pressed together.

7. The method according to any of the previous claims 5 to 6, wherein the method provides a homogenous lubricating film from the applied dry solid lubricant (301) on a surface of the tapered projection (19) of the first connector part (101) and/or on an surface of the recess (20) of the second connector part (102).

8. The method according to any of the preceding claims 5 to 7, wherein the dry solid lubricant (301) is applied by burnishing the dry solid lubricant (301) onto the surface of the tapered projection (19) and/or tapered recess (20).

9. The method according to any of the preceding claims 5 to 8, wherein the step of applying a dry solid lubricant (301) on the tapered recess (202) of the first tool (201) or on the tapered projection (19) of the first connector part (101) or on the tapered projection (204) of the second tool (203) or on the tapered recess (20) of the second connector part (102), involves applying the dry solid lubricant (301) in powder form onto any of said tapered projection (19, 204) or tapered recess (20, 202).

10. The method according to any of the preceding claims 5 to 9, wherein the tapered projection (19) of the first connector part (101) is a circular tapered cone projection, and wherein the tapered recess (20) of the second connector part (102) is a circular tapered cup recess.

11. The method according to any of the preceding claims 5 to 10,
wherein the dry solid lubricant (301) is burnished onto the surface of the tapered projection (19) by means of the first rotating burnishing tool (201) having a soft tooling surface, and/or
wherein the dry solid lubricant (301) is burnished onto the surface of the tapered recess (20) by the second rotating burnishing tool (203) having a soft tooling surface.

12. The method according to any of the preceding claims 5 to 11, wherein the dry solid lubricant (301) is Molybdenum disulphide, Tungsten Disulphide, Hexagonal Boron Nitride or PTFE.

13. The method according to any of the preceding claims 5 to 12, wherein the step of:
pressing the tapered projection (19) of the first connector part (101) against the matching tapered recess (202) of the first tool (201), or oppositely; and/or
pressing the tapered recess (20) of the second connector part (102) against the matching tapered projection (204) of the second tool (203), or oppositely;
involves pressing with a predetermined pressure is in the range of 5 - 200 Newton, specifically 25 - 75 Newton, and more specifically 40 - 60 Newton.

14. The method according to any of the preceding claims 5 to 13, wherein the step of:
rotating the first connector part (101) or the first tool (201); and/or
rotating the second connector part (102) or the second tool (203);
involves rotating with a predetermined speed in the range of 50-800 revolutions per minute (rpm), specifically in the range of 100-400 rpm, and more specifically in the range of 170 - 270 rpm.

15. The method according to any of the preceding claims 5 to 14, wherein the step of:
pressing the tapered projection (19) of the first connector part (101) against the matching tapered recess (202) of the first tool (201), or oppositely; and/or
pressing the tapered recess (20) of the second connector part (102) against the matching tapered projection (204) of the second tool (203), or oppositely;
involves pressing with a predetermined time period in the range of 10-240 seconds, specifically in the range of 30 - 150 seconds, and more specifically in the range of 50 - 70 seconds.
